(19) Europäisches Patentamt
European Patent Office
Office européen des brevets

(11) EP 2 537 906 B1

(12) # EUROPÄISCHE PATENTSCHRIFT

(45) Veröffentlichungstag und Bekanntmachung des Hinweises auf die Patenterteilung:
**07.12.2016 Patentblatt 2016/49**

(51) Int Cl.:
***C09J 9/00*** *(2006.01)* ***C09J 11/06*** *(2006.01)*
***C09J 7/00*** *(2006.01)* ***C08G 18/62*** *(2006.01)*
***C09J 175/04*** *(2006.01)*

(21) Anmeldenummer: **12171138.6**

(22) Anmeldetag: **07.06.2012**

(54) **Verfahren zur reversiblen kovalenten Vernetzung von Klebemassen**

Method for reversible covalent cross-linking of adhesive masses

Procédé de mise en réseau covalente et réversible de masses de collage

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.06.2011 DE 102011077927**

(43) Veröffentlichungstag der Anmeldung:
**26.12.2012 Patentblatt 2012/52**

(73) Patentinhaber: **tesa SE**
**22848 Norderstedt (DE)**

(72) Erfinder:
- **Prenzel, Alexander**
  **22529 Hamburg (DE)**
- **Bamberg, Sarah**
  **22529 Hamburg (DE)**

(56) Entgegenhaltungen:
**EP-A1- 0 658 610** **WO-A1-2010/092936**
**JP-A- 1 279 921** **US-A1- 2004 014 933**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 537 906 B1

## Beschreibung

Die vorliegende Erfindung betrifft ein Verfahren zur thermischen Vernetzung von Klebemassen sowie Produkte, die mit diesen Massen hergestellt werden.

Seit langem ist bekannt, dass bei Klebemassen insbesondere bei Acrylatklebemassen zur Erzeugung herausragender Klebeigenschaften eine Vernetzung erforderlich ist. Auch bei Kautschuken wird hierdurch eine Verbesserung der Klebeigenschaften erreicht.

Um eine ausreichende Stabilität der Klebemassen gegen hohe Temperaturen, Lösungsmittel und andere Einflüsse zu gewährleisten, werden meist Verfahren, wie beispielsweise chemisch/thermische Vernetzungsverfahren, als auch Verfahren mittels UV-Strahlung oder Elektronenstrahlung, bevorzugt, die zur Ausbildung einer kovalenten Vernetzung führen.

Die mittels zuvor genannter Verfahren hergestellten Klebemassen sind meist irreversibel vernetzt, was den Einsatz solch hergestellter Klebebänder für spezielle Anwendungen einschränkt, wie beispielsweise Wiederablösbarkeit der Klebemasse (als inhärente Eigenschaft als auch initiiert durch einen äußeren Stimulus). Gerade die Bedeutung des letzten Aspektes wächst deutlich hinsichtlich steigender Recyclingkreisläufe gerade bei elektronischen und elektrischen Produkten. Aufgrund der Rohstoffverknappung sind die Rohstoffpreise stark angestiegen, weshalb die die Demontage und die Wiederverwertung der elektronischen und elektrischen Bauteile wiederum wirtschaftlich geworden ist. Hierzu müssen die Bauteile, die aufgrund des Trends zur Miniaturisierung in der Elektronikindustrie immer häufiger verklebt werden, demontiert werden können, ohne die Bauteile zu beschädigen oder zu viele Rückstände des Klebstoffes zu hinterlassen.

Für solche Anwendungen bieten sich zunächst reversible Netzwerke an, die meist auf physikalischen Wechselwirkungen beruhen oder durch die Verwendung koordinativer Vernetzer erzeugt werden können. Die WO 2004 081 132 A1 beschreibt beispielsweise eine reversible Vernetzung mit öllöslichen Metallsalzen, jedoch ist anhand der genannten Beispiele gut zu erkennen, dass dieser Vernetzungsmechanismus nicht zur Herstellung thermisch stabiler Klebemassen geeignet ist. Weitere Beispiele für wiederablösbare Klebebänder basierend auf einem physikalischen Mechanismus werden in der US 2008 0 292 848 A1 genannt. Hier werden sogenannte shape memory materials, also Materialien, die nach einer mechanischen Verformung ihre ursprüngliche Form annehmen, verwendet, jedoch erhöht sich hierdurch die Komplexität des Produktaufbaus, da zur Nutzung solcher Effekte die Produkte mehrere Schichten aufweisen müssen.

Reaktionen wie Diels-Alder-Reaktionen sind sehr gut geeignet, um thermisch reversible, kovalente Netzwerke zu erzeugen. Die US 6,933,361 B2 beschreibt die Herstellung von Polymeren mittels multifunktioneller Furane und Maleimide, die als Zweikomponentensysteme für strukturelle Verklebungen eingesetzt werden können. Die Auswahl an Monomeren zur Herstellung haftklebriger Polymere ist ziemlich beschränkt und die Umsetzbarkeit ist aufgrund der hohen Reaktivität oder Nebenreaktionen mit konventionellen Polymerisationsverfahren nur schwer umsetzbar (S. D. Bergman, F. Wudl, J. Mater. Chem. 2008, 18, 41-62).

Strahlenchemische Vernetzungsmechanismen sind generell zur Herstellung reversibler Netzwerke nicht geeignet, da sowohl bei der UV- als auch bei der Elektronenstrahlvernetzung C-C-Bindungen geknüpft werden, die sich nicht wieder spalten lassen.

Die EP 0 658 610 A1 beschreibt ein Haftklebeband, welches rückstandsfrei entfernbar ist. Die Ablösbarkeit der Haftklebemasse wird in dieser Anmeldeschrift durch die Reduktion der Adhäsion kombiniert mit einem generellen schwachen Aufziehen der Klebemasse auf dem Substrat erreicht. Der Einsatz solcher Klebebänder beschränkt sich somit auf Anwendungen, in denen nur geringe Klebkräfte gefordert werden.

Aufgabe der Erfindung ist die Bereitstellung eines Verfahrens zur thermischen Vernetzung von Klebemassen, wobei die Vernetzung kovalent und (initiiert durch einen chemischen oder physikalischen Stimulus) reversibel ist. Bei Bedarf kann das Vernetzungsverfahren auch so gestaltet werden, dass ein kovalentes, irreversibles Netzwerk resultiert.

Im folgenden wird unter dem Begriff "reversibel" gemeint, dass das kovalente Netzwerk auch wieder zerstört werden kann, indem die kovalente Bindung gespalten wird, sich das Netzwerk jedoch nach Spaltung der kovalenten Bindung nicht zwangsläufig wieder herstellen lässt und somit der Begriff "reversibel" meist gleichbedeutend ist mit "einmalig reversibel".

Überraschenderweise wurde gefunden, dass der Einsatz von cyclischen Phosphonsäureanhydriden in - insbesondere thermisch - vernetzbaren Klebemassenzubereitungen, bei denen zumindest ein Teil der Polymerkomponenten mit organischen und/oder anorganischen OH-Gruppen enthaltenden an das Polymer gekoppelten Säureeinheiten funktionalisiert sind, zu hervorragenden vernetzten Klebemassen führt. Durch den Einsatz der cyclischen Phosphonsäureanhydride wird dabei die Vernetzungsreaktion aktiviert. Auf diese Art lassen sich hervorragend reversibel vernetzte Klebemassen herstellen. Das cyklische Phosphonsäureanhydrid wirkt nicht als vernetzende Komponente, sondern aktiviert die Vernetzung zwischen den Säuregruppen, was zu einer reversiblen Vernetzung der Klebemasse führt. Es hat sich herausgestellt, dass der im Vernetzungsverfahren verbrauchte Aktivator die Klebeeigenschaften des fertigen Produktes nicht oder nur unwesentlich nachteilig beeinflusst.

Als organische und/oder anorganische OH-Gruppen enthaltende Säureeinheiten sind beispielweise Carbonsäuregruppen, Maleinsäuregruppen, Sulfonsäuregruppen und/oder Phosphonsäuregruppen geeignet; besonders bevorzugt werden erfindungsgemäß Carbonsäuregruppen gewählt.

Als Vernetzung wird im Rahmen dieser Schrift eine solche Reaktion zwischen Polymer-Makromolekülen verstanden, bei der zwischen diesen Makromolekülen ein dreidimensionales Netzwerk ausgebildet wird. Als thermische Vernetzung wird eine durch thermische Energie initiierte Vernetzung verstanden. Je nach Art der erforderlichen Aktivierung kann die bei Raumtemperatur vorliegende thermische Energie bereits für eine thermische Vernetzung ausreichen, in der Regel wird jedoch eine Erwärmung durch aktive Beheizung vorgenommen, um die Vernetzung zu starten, oder die thermische Energie auf andere Art zugeführt, etwa durch mechanische Beeinflussung (wie etwa Ultraschall) oder durch exotherme Reaktionsabläufe im Reaktionssystem. Der Einfluss aktinischer (energiereicher) Strahlung, wie etwa ultraviolette Strahlen, Elektronenstrahlen oder radioaktiven Strahlen, ist nicht erforderlich. Eine durch aktinische Strahlung initiierte Vernetzungsreaktion kann jedoch genutzt werden, um die Effizienz der thermischen Vernetzung zu erhöhen.

Bei einer reversiblen Vernetzung lässt sich das gebildete Netzwerk durch geeignete Maßnahmen wieder (zumindest teilweise) auflösen, so dass die Makromoleküle wieder in nicht vernetzter Form vorliegen. Bei einer irreversiblen Vernetzung lässt sich das Netzwerk nicht zerstörungsfrei wieder lösen.

Als Klebemassenzubereitungen werden erfindungsgemäß Mischungen und Zusammensetzungen verstanden, die zumindest vernetzbare (unvernetzte und/oder teilvernetzte, weiter vernetzbare) Polymere, ggf. weitere Polymere und ggf. Zusatzstoffe umfassen, wobei nach einer Vernetzung dieser Zubereitungen vernetzte Polymersysteme vorliegen, die als Klebmassen geeignet sind.

Sehr vorteilhaft handelt es sich bei der Klebemasse um eine Haftklebemasse. Unter einer Haftklebemasse wird in dieser Schrift wie im allgemeinen Sprachgebrauch üblich ein Stoff verstanden, der - insbesondere bei Raumtemperatur - dauerhaft klebrig sowie klebfähig ist (im Rahmen dieser Schrift als "haftklebrig" oder auch als "selbstklebrig" bezeichnet). Charakteristisch für eine Haftklebemasse ist, dass sie durch Druck auf ein Substrat aufgebracht werden kann und dort haften bleibt. Abhängig von der genauen Art des Haftklebstoffs, der Temperatur und der Luftfeuchtigkeit sowie des Substrats kann die Einwirkung eines kurzfristigen, minimalen Drucks hinreichend sein, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebstoffe haben besondere, charakteristische viskoelastische Eigenschaften, die zu der dauerhaften Klebrigkeit und Klebfähigkeit führen. Kennzeichnend für sie ist, dass es, wenn sie mechanisch deformiert werden, sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des zu betrachtenden Haftklebstoffes als auch von der Geschwindigkeit und Dauer der Deformation sowie von der Temperatur.

Zusätzlich zu den Säurefunktionen, die an das Polymer gebunden sind, kann der Klebmassenzubereitung noch ein oder mehrere Vernetzer zur Steigerung der Effizienz der reversiblen Vernetzung zugesetzt sein. Als derartige Vernetzer sind Verbindungen geeignet, die durch zumindest zwei Säurefunktionen funktionalisiert sind, insbesondere durch Carbonsäuregruppen, Maleinsäuregruppen, Sulfonsäuregruppen und/oder Phosphonsäuregruppen. Die zumindest bifunktionellen Vernetzer können monomerer, oligomerer oder polymerer Art sein, wobei als zusätzliche Vernetzer insbesondere die kürzerkettigen, also monomerer oder oligomerer Art, bevorzugt werden.

Weiterhin wurde gefunden, dass die cyklischen Phosphonsäureanhydride ebenfalls als Kupplungsreagenzien für irreversible Vernetzungen geeignet sind.

In einer vorteilhaften Vorgehensweise enthält dabei die wie vorstehend beschrieben säurefunktionalisierte Klebmassenzubereitung zusätzlich noch zumindest eine Art an funktionellen Gruppen, die geeignet ist, mit in der jeweiligen Klebmassenzubereitung vorhandenen Säurengruppen eine Reaktion einzugehen, die zu einer kovalenten Vernetzung führt. Hierzu geeignete funktionelle Gruppen umfassen beispielweise primäre und sekundäre Amine, primäre, sekundäre und tertiäre Alkohole, Phenole, 1,3-Diketone und heteroaromatische Verbindungen wie beispielsweise Pyrazole. Die zusätzlichen funktionellen Gruppen können dabei an die carbonsäure-, maleinsäure-, sulfonsäure- und/oder phosphonsäurehaltigen Polymere und/oder an andere in der Klebmassenzusammensetzung enthaltene Polymere gebunden sein.

Weiterhin kann die erfindungsgemäße Klebmassenzubereitung, zusätzlich zu den als Kupplungsreagenzien fungierenden cyklischen Phosphonsäureanhydriden, mit Vernetzern abgemischt werden, die zu irreversiblen Vernetzungsreaktionen führen. Die Vernetzer weisen bevorzugt mindestens zwei funktionelle Gruppen auf, die mit den Säuregruppen des Polymers reagierten können; vorteilhaft der vorstehend beschriebenen Art (also insbesondere primäre und sekundäre Amine, primäre, sekundäre und tertiäre Alkohole, Phenole, 1,3-Diketone und heteroaromatische Verbindungen wie beispielsweise Pyrazole).

In einer alternativen Vorgehensweise für die irreversible Vernetzung sind die Polymere der Klebemassenzubereitung nicht mit Säuregruppen funktionalisiert, sondern ganz oder teilweise mit solchen wie vorstehend beschriebenen funktionellen Gruppen, die mit Säuregruppen reagieren können (also insbesondere primäre und sekundäre Amine,

primäre, sekundäre und tertiäre Alkohole, Phenole, 1,3-Diketone und heteroaromatische Verbindungen wie beispielsweise Pyrazole). Der Klebemassenzubereitung werden dann weiterhin solche Vernetzer zugesetzt, wie sie weiter oben für die Steigerung der reversiblen Vernetzung beschrieben sind, also solche - monomeren, oligomeren und/oder polymeren - Verbindungen, die durch zumindest zwei Säurefunktionen - insbesondere Carbonsäuregruppen, Maleinsäuregruppen, Sulfonsäuregruppen und/oder Phosphonsäuregruppen - funktionalisiert sind. Als Aktivator wird wiederum zumindest ein cyklisches Phosphonsäureanhydrid eingesetzt. Durch die Reaktion zwischen den funktionellen Gruppen der Polymere der Klebmassenzubereitung und den Säuregruppen des zumindest bifunktionellen Vernetzers kommt es in diesem Fall zu einer irreversiblen Vernetzung.

Detaillierte Beschreibung der Erfindung

In einer bevorzugten erfindungsgemäßen Ausführungsform ist das cyclische Phosphonsäureanhydrid ein cyklisches Alkylphosphonsäureanhydrid.

In einer weiter bevorzugten erfinderischen Ausführungsform ist das cyklische Alkylphosphonsäureanhydrid ein 2,4,6-substituiertes 1,3,5,2,4,6-Trioxatriphosphinan-2,4,6-trioxid der Formel (I)

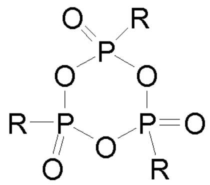

(I),

worin R unabhängig voneinander für Allyl, Aryl oder offenkettige oder verzweigte C1- bis C12-Alkyl-Reste, insbesondere für C1 - C8-Alkylreste steht.

Besonders bevorzugt werden Phosphonsäureanhydride der Formel (I) in denen R für einen Methyl-, Ethyl-, n-Propyl- (2,4,6-Tripropyl-1,3,5,2,4,6-trioxatriphosphorinan-2,4,6-trioxid (CAS-Nr. 68957-94-8, Handelsname: Coupling Agent ®T3P von Archimica)), Isopropyl-, n-Butyl-, 2-Butyl-, Isobutyl-, Pentyl-, Hexyl-, insbesondere einen Ethyl-, Propyl- und/oder Butyl-Rest steht.

Das cyclische Phosphonsäureanhydrid kann dem Reaktionsmedium entweder als Schmelze oder als flüssige Mischung gelöst in einem Lösungsmittel zugegeben werden. Geeignete Lösungsmittel sind dabei solche, die keine Nebenreaktionen mit dem Phosphonsäureanhydrid ergeben, dies sind alle aprotischen organischen Lösungsmittel, wie z.B. Ligroin, Butan, Pentan, Hexan, Heptan, Octan, Cyclobutan, Cyclopentan, Cyclohexan, Cycloheptan, Cyclooctan, Dichlormethan, Chloroform, Tetrachlorkohlenstoff, 1,2-Dichlorethan, 1,1,2,2-Tetrachlorethan, Methylacetat, Ethylacetat, Propylacetat, Butylacetat, Dimethylformamid, Diethylformamid, Dimethylacetamid, Diethylacetamid, Diethylether, Diisopropylether, *tert*-Butyl-Methylether, THF, Dioxan, Acetonitril, Aceton, Butanon oder Gemische aus diesen, besonders bevorzugt sind Dichlormethan, Chloroform, Ethylacetat, Propylacetat, Butylacetat, Dimethylformamid, Diethylformamid, Dimethylacetamid, Diethylacetamid, Diisopropylether, *tert*-Butyl-Methylether, THF, Dioxan, Acetonitril, Aceton oder Gemische aus diesen, ganz besonders bevorzugt werden THF, Ethylacetat, Butylacetat, Aceton, Butanon.

Mindestens eine der Komponenten der Klebemassenzubereitung ist dafür verantwortlich, dass die vernetzte Klebemassenzubereitung, also die fertige Klebemasse, klebrige, insbesondere haftklebrige, Eigenschaften aufweist. Diese Komponente kann diejenige sein, die die Säuregruppen aufweist; und/oder diejenige, die die gegebenenfalls weiteren funktionellen Gruppen aufweist. Die jeweiligen Gruppen können stattdessen oder zusätzlich an einer und/oder mehreren weiteren Komponente der Klebmassenzubereitung vorgesehen sein.

Die Basis der Klebemassen - insbesondere Haftklebemassen - sowie die (Haft-)Klebebänder bestehend aus den zuvor genannten (Haft-)Klebemassen, die mittels des erfindungsgemäßen Verfahrens hergestellt werden, umfasst alle dem Fachmann bekannten Polymere und/oder Mischungen aus Polymeren, die zur Herstellung von Klebemassen bzw. Haftklebemassen geeignet sind, sofern die Polymere oder mindestens eines der Polymer der Polymermischung eine Funktionalität aufweisen, die durch das cyklische Phosphonsäureanhydrid aktiviert werden kann, wie dies vorstehend dargestellt ist.

In einer bevorzugten Variante werden thermisch-vernetzbare reversible Haftklebemassen auf Poly(meth)acrylatbasis eingesetzt. Die Masse umfasst vorteilhaft ein Polymer, bestehend aus

(a1) 70 bis 100 Gew.-% Acrylsäureester und/oder Methacrylsäureester und/oder deren freien Säuren mit der Formel (II)

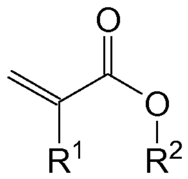

(II),

wobei $R^1$ H und/oder $CH_3$ darstellt und $R^2$ H und/oder Alkylketten mit 1 bis 30 C-Atomen darstellt;
(a2) 0 bis 30 Gew.-% olefinisch ungesättigte Monomere mit funktionellen Gruppen und
(a3) optional weitere Acrylate und/oder Methacrylate und/oder olefinisch ungesättigte Monomere (0 bis 5 Gew.-%), die mit der Komponente (a) copolymerisierbar sind und eine funktionelle Gruppe aufweisen, die mittels des Kupplungsreagenzes zu einer kovalenten, irreversiblen Vernetzung führt.

Die Gewichtsangaben beziehen sich auf das Polymer.

Vorzugsweise werden für die Monomere (a1) Acrylmomonere, umfassend Acryl- und Methacrylsäureester mit Alkylgruppen, bestehend aus 1 bis 14 C-Atomen, eingesetzt. Spezifische Beispiele, ohne sich durch diese Aufzählung einschränken zu wollen, sind Methylacrylat, Methylmethacrylat, Ethylacrylat, Ethylmethacrylat, Propylacrylat, Propylmethacrylat, n-Butylacrylat, n-Butylmethacrylat, n-Pentylacrylat, n-Hexylacrylat, n-Hexylmethacrylat, n-Heptylacrylat, n-Octylacrylat, n-Nonylacrylat, Laurylacrylat, Stearylacrylat, Stearylmethacrylat, Behenylacrylat, und deren verzweigten Isomere, wie z. B. 2-Ethylhexylacrylat. Weitere einzusetzende Verbindungsklassen, die ebenfalls in geringen Mengen unter (a1) hinzugesetzt werden können, sind Cyclohexylmethacrylate, Isobornylacrylat und Isobornylmethacrylate.

Vorzugsweise werden für (a2) Monomere verwendet, wie beispielsweise Maleinsäureanhydrid, Itaconsäureanhydrid, Glycidylmethacrylat, Benzylacrylat, Benzylmethacrylat, Phenylacrylat, Phenylmethacrylat, *tert*-Butylphenylacrylat, *tert*-Butylphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat und Tetrahydrofufurylacrylat, wobei diese Aufzählung nicht abschließend ist.

Ebenso bevorzugt werden für die Komponente (a2) aromatische Vinylverbindungen eingesetzt, wobei die aromatischen Kerne bevorzugt aus C4- bis C18-Bausteinen bestehen und auch Heteroatome enthalten können. Besonders bevorzugte Beispiele sind Styrol, 4-Vinylpyridin, *N*-Vinylphthalimid, Methylstyrol und 3,4-Dimethoxystyrol, wobei diese Aufzählung nicht abschließend ist.

Besonders bevorzugte Beispiele für die Komponente (a3) sind Hydroxyethylacrylat, 3-Hydroxypropylacrylat, Hydroxyethylmethacrylat, 3-Hydroxypropylmethacrylat, 4-Hydroxybutylacrylat, 4-Hydroxybutylmethacrylat, Allylalkohol, Itaconsäure, Acrylamid und Cyanoethylmethacrylat, Cyanoethylacrylat, 6-Hydroxyhexylmethacrylat, *N-tert*-Butylacrylamid, *N*-Methylolmethacrylamid, *N*-(Butoxymethyl)methacrylamid, *N*-Methylolacrylamid, *N*-(Ethoxymethyl)acrylamid, *N*-Isopropylacrylamid, Vinylessigsäure, $\beta$-Acryloyloxypropionsäure, Trichloracrylsäure, Fumarsäure, Crotonsäure, Aconitsäure, Dirnethylacrylsäure, 4-Vinylbenzoesäure, wobei diese Aufzählung nicht abschließend ist.

Zur Polymerisation werden die Monomere dermaßen gewählt, dass die resultierenden Polymere als thermisch vernetzbare Haftklebemassen eingesetzt werden können, insbesondere derart, dass die resultierenden Polymere haftklebende Eigenschaften entsprechend dem "Handbook of Pressure Sensitive Adhesive Technology" von Donatas Satas (van Nostrand, New York 1989) besitzen.

Die Art der Comonomere wird so gewählt, dass die Glasübergangstemperatur $T_{G,A}$ der Polymere unterhalb der Anwendungstemperatur, bevorzugt bei $T_{G,A} \leq 15$ °C liegt. Um dies zu erreichen, wird weiterhin die mengenmäßige Zusammensetzung der Monomermischung vorteilhaft derart gewählt, dass sich nach der Fox-Gleichung (G1) (vgl. T.G. Fox, Bull. Am. Phys. Soc. 1956, 1, 123) der gewünschte $T_{G,A}$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K.

Zur Herstellung der Polyacrylathaftklebemassen werden vorteilhaft konventionelle radikalische Polymerisationen oder kontrollierte radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate und/oder Methacrylate dem Fachmann geläufigen, üblichen Initiatoren. Die Produktion von C-zentrierten Radikalen ist im Houben-Weyl, Methoden der Organischen Chemie, Vol. E 19a, S. 60-147, beschrieben. Diese Methoden werden in bevorzugter Weise in Analogie angewendet.

Beispiele für Radikalquellen sind Peroxide, Hydroperoxide und Azoverbindungen. Als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di*tert*-butylperoxid, Azobisiisobutyronitril, Cyclohexylsulfonylacetylperoxid, Diisopropylpercarbonat, *tert*-Butylperoktoat, Benzpinacol. Besonders bevorzugt wird als radikalischer Initiator 1,1'-Azobis-(cyclohexancarbonsäurenitril) (Vazo 88™ der Fa. DuPont) verwendet.

Die mittleren Molekulargewichte Mn der bei der radikalischen Polymerisation entstehenden Haftklebemassen werden sehr bevorzugt derart gewählt, dass sie in einem Bereich von 20.000 bis 2.000.000 g/mol liegen; bevorzugt werden Haftklebemassen mit mittleren Molekulargewichten Mw von 200.000 bis 1.200.000 g/mol hergestellt. Die Bestimmung des mittleren Molekulargewichtes erfolgt über Gelpermeationschromatographie (GPC).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z. B. Hexan, Heptan, Octan, Isooctan), aromatische Kohlenwasserstoffe (z. B. Benzol, Toluol, Xylol), Ester (z.B. Essigsäureethylester, Essigsäurepropyl-, -butyl- oder -hexylester), halogenierte Kohlenwasserstoffe (z. B. Chlorbenzol), Alkanole (z. B. Methanol, Ethanol, Ethylenglycol, Ethylenglycolmonomethylether), Ketone (z. B. Aceton, Butanon) und Ether (z. B. Diethylether, Dibutylether) oder Gemische davon. Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, *N*-Alkylpyrrolidinonen, *N*-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Zur Radikalstabilisierung werden in günstiger Vorgehensweise Nitroxide eingesetzt, wie z. B. 2,2,5,5-Tetramethyl-1-pyrrolidinyloxyl (PROXYL), 2,2,6,6-Tetramethyl-1-piperidinyloxyl (TEMPO), Derivate des PROXYLs oder des TEMPOs und weitere dem Fachmann geläufige Nitroxide.

Eine Reihe weiterer Polymerisationsmethoden, nach denen die Klebemassen in alternativer Vorgehensweise hergestellt werden können, lassen sich aus dem Stand der Technik wählen: WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterocyclische Alkoxyamine als Regulatoren in kontrolliert radikalischen Polymerisationen.

Als weitere kontrollierte Polymerisationsmethode lässt sich in vorteilhafter Weise zur Synthese von Blockcopolymeren die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe eingesetzt werden. Die unterschiedlichen Möglichkeiten der ATRP sind ferner in den Schriften der US 5,945,491 A, der US 5,854,364 A und der US 5,789,487 A beschrieben.

Als sehr bevorzugter Herstellprozess wird eine Variante der RAFT-Polymerisation (reversible addition-fragmentation chain transfer polymerization) durchgeführt. Der Polymerisationsprozess ist z. B. in den Schriften WO 98/01478 A1 und WO 99/31144 A1 ausführlich beschrieben. Zur Herstellung eignen sich besonders vorteilhaft Trithiocarbonate der allgemeinen Struktur R'''-S-C(S)-S-R''' (Macromolecules 2000, 33, 243-245).

In einer sehr vorteilhaften Variante werden beispielsweise die Trithiocarbonate (TTC1) und (TTC2) oder die Thioverbindungen (THI1) und (THI2) zur Polymerisation eingesetzt, wobei Φ ein Phenylring, der unfunktionalisiert oder durch Alkyl- oder Arylsubstituenten, die direkt oder über Ester- oder Etherbrücken verknüpft sind, funktionalisiert sein kann, eine Cyanogruppe oder ein gesättigter oder ungesättigter aliphatischer Rest sein kann. Der Phenylring Φ kann optional einen oder mehrere Polymerblöcke, beispielsweise Polybutadien, Polyisopren, Polychloropren oder Poly(meth)acrylat, das entsprechend der Definition für P(A) oder P(B) aufgebaut sein kann, oder Polystyrol tragen, um nur einige zu nennen. Funktionalisierungen können beispielsweise Halogene, Hydroxygruppen, Epoxidgruppen, stickstoff- oder schwefelenthaltende Gruppen sein, ohne dass diese Aufzählung Anspruch auf Vollständigkeit erhebt.

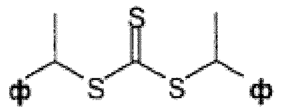

(TTC 1)

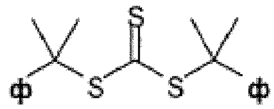

(TTC 2)

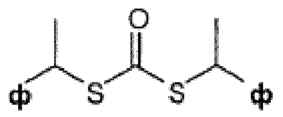

(THI 1)

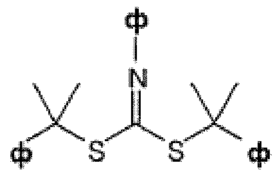

(THI 2)

In Verbindung mit den oben genannten kontrolliert radikalisch verlaufenden Polymerisationen werden Initiatorsysteme bevorzugt, die zusätzlich weitere radikalische Initiatoren zur Polymerisation enthalten, insbesondere die schon zuvor aufgezählten thermisch zerfallenden radikalbildenden Azo- oder Peroxoinitiatoren. Prinzipiell eignen sich hierfür jedoch alle für Acrylate und/oder Methacrylate bekannten üblichen Initiatoren. Weiterhin können auch Radikalquellen verwendet werden, die erst unter UV-Bestrahlung Radikale freisetzen.

In weiteren, vorteilhaften Ausführungsformen der Erfindung werden andere, dem Fachmann zur Herstellung von Haftklebemassen bekannte und geeignete Polymere verwendet, die eine Funktionalität ausweisen, die durch Aktivierung mittels eines cyklischen Phosphonsäureanhydrides zur Ausbildung einer reversiblen und/oder irreversiblen Vernetzung führen. Beispielhaft aber nicht einschränkend genannt seien Säure- oder Maleinsäureanhydrid-modifizierte gesättigte und/oder ungesättigte Synthesekautschuke und Styrolblockcopolymere, teilhydriertes Polyvinylacetat, teilhydrierte EVA-Systeme, Polyurethane, Polyester, Silikone.

Zur vorteilhaften Weiterentwicklung können den Klebemassen, insbesondere den Haftklebemassen, Harze beigemischt werden. Als klebrigmachende Harze sind die grundsätzlich vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebemasse wunschgemäß einzustellen. Im allgemeinen lassen sich alle mit der entsprechenden Klebemasse kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Weiterhin können optional Weichmacher (Plastifizierungsmittel), Füllstoffe (z. B. Fasern, Russ, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z. B. in Form von primären und sekundären Antioxidantien oder in Form von Lichtschutzmitteln zugesetzt werden.

Die vorstehend genannten Harze und/oder Additive, die nachstehend genannten (insbesondere irreversiblen)Vernetzer sowie etwaige, weitere Zusatzstoffe werden der Klebemassenzubereitung üblicherweise vor und/oder während der durch die Phosphonsäureanhydrid-aktivierte reversible Vernetzung zugesetzt, sofern dies für das Vernetzungsverfahren nicht nachteilig ist.

Für die Verankerung der Klebemassen auf einem Substrat, beispielweise einem Träger zur Klebebandherstellung, kann es von Vorteil sein, wenn das Polymer vor der Beschichtung mit Corona oder Plasma behandelt wird. Für die atmosphärische Plasmabehandlung eignen sich z. B. Geräte der Fa. Plasmatreat.

Weiterhin kann es für den Prozess und für die Verankerung der Schicht mit weiteren möglichen Schichten, einer Folie auf Basis von Polyester, Polyamid, Polymethacrylat, PVC, etc. oder einem viskoelstischen geschäumten oder ungeschäumten Träger auf Basis von Polyacrylat oder Polyurethan von Vorteil sein, wenn eine chemische Verankerung z. B. über einen Primer stattfindet.

Bevorzugt wird die innere Festigkeit (Kohäsion) der Klebemasse durch eine Vernetzung gesteigert. Besonders bevorzugt sind Haftklebemassen, insbesondere Haftklebemassen basierend auf Polyacrylaten, die reversibel vernetzbar sind. Um nun zu gewährleisten, dass die Klebemasse ein konstantes Eigenschaftsprofil besitzt, wird die reversible kovalente Vernetzung bevorzugt so gewählt, dass das Netzwerk erst durch einen äußeren Stimulus zerstört wird.

Überraschend wurde gefunden, dass Klebemassen (insbesondere Haftklebemassen), die mittels eines cyklischen Phosphonsäureanhydrides als Kupplungsreagenz vernetzt wurden, durch Behandlung mit sauren oder basischen wässrigen Lösungen sowie Alkanol-basierten Lösungsmittel wieder ablösbar werden, dass die Vernetzung jedoch gegenüber allen anderen Einflüssen sowie gegenüber Wasser, erhöhter Luftfeuchtigkeit und anderen organischen Lösungsmitteln stabil ist.

Den Klebemassen (insbesondere Haftklebemassen) können optional zusätzlich zu den cyklischen Phosphonsäureanhydriden verträgliche Vernetzersubstanzen zugesetzt werden, um die Effizienz der reversiblen Vernetzung zu steigern und/oder eine irreversible Vernetzung zu erzeugen. Beispiele für entsprechende Vernetzersubstanzen sind bereits weiter oben beschrieben.

In einer weiteren vorteilhaften Ausführungsform können zur Ausbildung eines irreversiblen Netzwerkes alternativ zu den vorgenannten Vernetzern oder zusätzlich hierzu solche Vernetzer gewählt werden, die nicht durch die cyklischen Phosphonsäureanhydride aktiviert werden, wie z. B. Metallchelate, multifunktionelle Isocyanate, multifunktionelle Epoxide, multifunktionelle Aziridine, multifunktionelle Oxazoline oder multifunktionelle Carbodiimide. Auch multifunktionelle Acrylate lassen sich vorteilhaft als Vernetzer für eine actinische Bestrahlung verwenden.

Ein Vernetzungsverfahren, bei dem zwei unterschiedliche Vernetzungsreaktionen ausgeführte werden, wie insbesondere eine thermische Vernetzung und eine aktinische Vernetzung, wird auch als "Dual-Cure-Verfahren" bezeichnet. Ein solches Dual-Cure-Verfahren wird im Rahmen dieser Schrift ebenfalls als erfindungsgemäß angesehen. Besonders vorteilhaft wird eine thermische Vernetzung durchgeführt, die mit cyclischen Phosphonsäureanhydriden aktiviert ist, und außerdem eine strahlungsinitiierte Vernetzung insbesondere wie im Rahmen dieser Schrift beschrieben, die vorteilhaft durch ultraviolette Strahlung (UV-Strahlen) und/oder durch Elektronenstrahlen (ESH) initiiert ist.

Die zuvor beschriebenen erfindungsgemäßen Klebemassen, insbesondere Haftklebemassen, eignen sich hervorragend zur Herstellung von einseitigen oder doppelseitigen Klebebändern, wobei alle dem Fachmann geläufigen Trägermaterialien verwendet werden können. Beispielhaft aber nicht einschränkend sind PET-, PVC- und PP-Folien, Papier, Vliese, Gewebe und Schäume als Trägermaterialien einsetzbar.

Das Klebeband ist für Transport, Lagerung oder Stanzung vorzugsweise mindestens einseitig mit einem Liner versehen, also zum Beispiel einer silikonbeschichteten Folie oder einem Silikonpapier.

Eine weitere vorteilhafte Ausführung der Erfindung ist die Verwendung einer trägerfreien Klebemasse für das selbstklebende Klebeband. Als trägerfreie Klebemasse wird eine Klebemasse bezeichnet, die keinen dauerhaften Träger, wie eine Polymerfolie oder ein Vlies, aufweist. Vielmehr ist die selbstklebende Masse in bevorzugter Ausgestaltung lediglich auf einen Liner, also ein Material, das lediglich vorübergehend zur Stützung und leichteren Auftragbarkeit der selbstklebenden Masse dient, aufgebracht. Nach dem Aufbringen der selbstklebenden Masse auf die Substratoberfläche, wird der Liner dann entfernt und der Liner stellt somit kein produktives Bauteil dar.

In einer weiteren vorteilhaften Ausführung der Erfindung kann das Verfahren zur Herstellung der Klebmassen auch genutzt werden, um viskoelastische geschäumte oder ungeschäumte Schichten herzustellen, die an sich als Träger dienen und zusätzlich auf mindestens einer Seite noch mit einer Haftklebemasse kaschiert werden.

Die Herstellung der erfindungsgemäßen Haftklebemassen kann aus Lösung sowie aus der Schmelze erfolgen. Für den letzteren Fall umfassen geeignete Herstellprozesse sowohl Batchverfahren als auch kontinuierliche Verfahren. Besonders bevorzugt ist die kontinuierliche Fertigung mit Hilfe eines Extruders und anschließender Beschichtung direkt auf einem Liner mit oder ohne Klebemasseschicht.

Gegenstand der vorliegenden Erfindung ist zudem die Verwendung eines - insbesondere selbstklebenden - Klebebandes mit der erfindungsgemäßen reversibel und kovalent vernetzten (Haft-)Klebemasse, besonders bevorzugt einer Polyacrylat-basierten Haftklebemasse, zur Verklebung elektronischer Bauteile, bei denen es aufgrund der immer höher steigenden Rohstoffpreise sinnvoll ist, sie wiederzuverwerten. Die - insbesondere selbstklebende - Masse ist insbesondere gemäß den zuvor beschriebenen Anforderungen so gewählt, dass sie durch einen äußeren Stimulus, bevorzugt durch Behandlung mittels saurer oder basischer wässriger Lösungen oder Alkanol-basierten Lösungsmitteln, rückstandsfrei entfernbar ist, sodass das elektronische Bauteil ohne Zerstörung ausgebaut und wiederverwertet werden kann. Darüber hinaus sollte die Klebemasse eine möglichst hohe Temperaturbeständigkeit aufweisen, um möglichst vielfältige Einsatzgebiete in elektronischen Bauteilen zu ermöglichen. Insbesondere ist vorgesehen, dass die Klebemasse bis zu -5 °C, vorzugsweise bis zu -15 °C, weiter vorzugsweise bis zu -30 °C temperaturbeständig ist. Zudem sollte die Klebemasse auch bis zu 70 °C, vorzugsweise bis zu 80 °C, weiter vorzugsweise bis zu 100 °C temperaturbeständig sein.

Im Folgenden wird die Erfindung anhand der Beispiele näher erläutert, ohne die Erfindung damit zu beschränken.

### Experimenteller Teil

Sofern im Einzelnen nichts anderes angegeben ist oder sich ergibt, erfolgen die Probenvorbereitungen und die Messungen unter Standardbedingungen (25 °C, 101325 Pa).

I. Statische Glasübergangstemperatur Tg

Die Bestimmung der statischen Glasübergangstemperatur erfolgt über Dynamische Differenzkalorimetrie nach DIN 53765. Die Angaben zur Glasübergangstemperatur Tg beziehen sich auf den Glasumwandlungstemperatur-Wert Tg nach DIN 53765:1994-03, sofern im Einzelfall nichts anderes angegeben ist.

II. Molekulargewichte

Die Bestimmung der mittleren Molekulargewichte (Gewichtsmittel Mw und Zahlenmittel Mn) und der Polydispersität D erfolgte mittels Gelpermeationschromatographie (GPC). Als Eluent wurde THF mit 0,1 Vol.-% Trifluoressigsäure eingesetzt. Die Messung erfolgte bei 25 °C. Als Vorsäule wurde PSS-SDV, 5 μm, 103 Å (10-7 m), ID 8,0 mm x 50 mm verwendet. Zur Auftrennung wurden die Säulen PSS-SDV, 5 μm, 103 Å (10-7 m), 105 Å (10-5 m) und 106 Å (10-4 m) mit jeweils ID 8,0 mm × 300 mm eingesetzt. Die Probenkonzentration betrug 4 g/l, die Durchflussmenge 1,0 ml pro Minute. Es wurde gegen PMMA-Standards gemessen.

III. Feststoffgehalt:

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

IV. K-Wert (nach FIKENTSCHER):

Der K-Wert ist ein Maß für die durchschnittliche Molekülgröße hochpolymerer Stoffe. Zur Messung wurden einprozentige (1g/100 ml) toluolische Polymerlösungen herstellt und mit Hilfe eines VOGEL-OSSAG-Viskositmeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 8/1967, 381 ff.)

V. Quantitative Ermittlung der Scherfestigkeit: Statischer Schertest SSZ

Ein rechteckiges Prüfmuster der Größe 13 mm × 20 mm des zu prüfenden doppelseitigen Klebebandes wird zwischen zwei Stahlplättchen (50 mm × 25 mm × 2mm; Material nach DIN EN 10088-2, Typ 1, 4301, Oberflächenqualität 2R, kaltgewalzt und blankgeglüht, Ra = 25 - 75 nm) so verklebt, dass die Verklebungsfläche des Prüfmusters mit beiden Stahlplättchen je 260 $mm^2$ beträgt, die Stahlplättchen in Längsrichtung versetzt parallel ausgerichtet sind, so dass das Prüfmuster mittig zwischen ihnen verklebt ist und die Stahlplättchen auf unterschiedlichen Seiten über das Prüfmuster hinausragen. Anschließend wird für 1 min mit einem Anpressdruck von 100 $N/cm^2$ verpresst. Nach vorgegebener Aufziehzeit (sofern nicht anders angegeben, 72 Stunden bei Raumtemperatur) werden die so präparierten Prüfkörper mit dem einen über das Prüfmuster hinausragenden Stahlplättchenbereich an einem Schertestmessplatz derart aufgehängt, das die Längsrichtung der Stahlplättchen nach unten ausgerichtet ist, und der über das Prüfmuster hinausragenden Bereich des anderen Stahlplättchens wird bei vorgegebener Temperatur mit einem gewählten Gewicht belastet (Messungen bei Raumtemperatur und mit 20 N Belastung sowie bei 70 °C und mit 10 N Belastung; siehe Angaben in der jeweiligen Tabelle). Prüfklima: Standardbedingungen, 50 % rel. Feuchte. Eine automatische Zähleruhr ermittelt nun die Zeitdauer bis zum Versagen der Prüfmuster in min (Abfallen des belasteten Stahlplättchens).

VI. Schälfestigkeit _(Klebkraft)_KK

Ein Streifen des zu untersuchenden (Haft-)Klebebandes wird in definierter Breite (Standard: 20 mm) auf einer geschliffenen Stahlplatte (rostfreier Stahl 302 nach ASTM A 666; 50 mm × 125 mm × 1,1 mm; glänzende geglühte Oberfläche; Oberflächenrauigkeit Ra = 50 ± 25 nm arithmetische Durchschnittsabweichung von der Basislinie) durch zehnmaliges Überrollen mittels einer 5 kg Stahlrolle verklebt. Doppelseitig klebende Klebebänder werden mit einer 36 μm dicken Hart-PVC-Folie rückseitig verstärkt. Jeweils identische Proben werden hergestellt und entweder für eine Sofortmessung bereitgestellt, 3 Tage gelagert und vermessen bzw. 14 Tage gelagert und vermessen.

Die präparierte Platte wird in das Prüfgerät eingespannt (fixiert) und der Klebestreifen über sein freies Ende an einer Zugprüfmaschine unter einem Schälwinkel von 90° mit einer Geschwindigkeit von 300 mm/min in Längsrichtung des Klebebandes von der Platte abgezogen. Die dafür notwendige Kraft ermittelt. Die Messergebnisse sind in N/cm angegeben (Kraft normiert auf die jeweils gelöste Verklebungsstrecke) und über drei Messungen gemittelt. Alle Messungen werden in einem klimatisierten Raum bei 23 °C und 50 % relativer Luftfeuchte durchgeführt.

VII. Mikroschertest

Dieser Test dient der Schnellprüfung der Scherfestigkeit von Klebebändern unter Temperaturbelastung.

*Messprobenpräparation für Mikroschertest:*

Ein aus dem jeweiligen Probenmuster geschnittenes Klebeband (Länge ca. 50 mm, Breite 10 mm) wird auf eine mit Aceton gereinigte Stahl-Prüfplatte verklebt, so dass die Stahlplatte das Klebeband rechts und links überragt und dass das Klebeband die Prüfplatte am oberen Rand um 2 mm überragt. Die Verklebungsfläche der Probe beträgt Höhe - Breite = 13mm) 10mm. Die Verklebungsstelle wird anschließend mit einer 2 kg-Stahlrolle und einer Geschwindigkeit von 10 m/min sechsmal überrollt. Das Klebeband wird bündig mit einem stabilen Klebestreifen verstärkt, der als Auflage für den Wegmessfühler dient. Die Probe wird mittels der Prüfplatte senkrecht aufgehängt.

*Mikroschertest:*

Das zu messende Probenmuster wird am unteren Ende mit einem Gewicht von 100 g belastet. Die Prüftemperatur beträgt 40 °C, die Prüfdauer 30 Minuten (15 Minuten Belastung und 15 Minuten Entlastung). Die Scherstrecke nach der vorgegebenen Testdauer bei konstanter Temperatur wird als Ergebnis in μm angegeben, und zwar als Maximalwert ["max"; maximale Scherstrecke durch 15 minütige Belastung]; als Minimalwert ["min"; Scherstrecke ("Restauslenkung") 15 min nach Entlastung; bei Entlastung erfolgt eine Rückbewegung durch Relaxation]. Angegeben wird ebenfalls der elastische Anteil in Prozent ["elast"; elastischer Anteil = (max - min)- 100 / max].

Tabelle 1: Verwendete Rohstoffe:

| *Chemische Verbindung* | *Handelsname* | *Hersteller* | *CAS-Nr.* |
|---|---|---|---|
| Bis-(4-*tert*-butylcyclohexyl)peroxydicarbonat | Perkadox® 16 | Akzo Nobel | 15520-11-3 |
| 2,2'-Azobis(2-methylbutyronitrile) | Vazo® 67 | DuPont | 13472-08-7 |
| 2,4,6-Tripropyl-1,3,5,2,4,6-trioxatriphosphorinan-2,4,6-trioxid | Coupling Agent ®T3P | Archimica | 68957-94-8 |
| Aluminium-(III)-acetylacetonat | | Sigma-Aldrich | 13963-57-0 |
| Niedrigviskoses, aliphatisches Polyisocyanat-Harz auf Basis Hexamethylendiisocyanat | Desmodur® N 3900 | Bayer Material Science | 28182-81-2 |
| Acrylsäu re-n-butylester | n-Butylacrylat | Rohm & Haas | 141-32-2 |
| Acrylsäure | Acrylsäure rein | BASF | 79-10-7 |
| 2-Ethylhexylacrylat | | Brenntag | 103-11-7 |
| 2-Hydroxyethylmethacrylat | Bisomer™ HEMA | Cognis | 868-77-9 |

Im Folgenden werden für die Kupplungsreagenzien bzw. Vernetzer 2,4,6-Tripropyl-1,3,5,2,4,6-trioxatriphosphorinan-2,4,6-trioxid und Aluminium-(III)-acetylacetonat die Bezeichnungen T3P und $Al(acac)_3$ verwendet.

Herstellung Basispolymer Ac1

Ein für radikalische Polymerisationen konventioneller Reaktor wurde mit 30,0 kg 2-Ethylhexylacrylat, 67,0 kg Butylacrylat, 3,0 kg Acrylsäure und 66,7 kg Aceton/ Isopropanol (96:4) befüllt. Nach 45minütiger Durchleitung von Stickstoffgas unter Rühren wurde der Reaktor auf 58 °C hochgeheizt und 50 g Vazo 67, gelöst in 500 g Aceton, hinzugegeben. Anschließend wurde das äußere Heizbad auf 70 °C erwärmt und die Reaktion konstant bei dieser Außentemperatur durchgeführt. Nach 1 h wurden erneut 50 g Vazo 67, gelöst in 500 g Aceton, zugegeben und nach 2 h mit 10 kg Aceton/Isopropanol-Gemisch (96:4) verdünnt. Nach 5,5 h wurden 150 g Bis-(4-*tert*-butylcyclohexyl)peroxydicarbonat, gelöst in 500 g Aceton, zugegeben; nach 6 h 30 min wurde erneut mit 10 kg Aceton/Isopropanol-Gemisch (96:4) verdünnt.

Nach 7 h wurden weitere 150 g Bis-(4-*tert*-butylcyclohexyl)peroxydicarbonat, gelöst in 500 g Aceton, zugegeben und das Heizbad auf eine Temperatur von 60 °C eingeregelt.
Nach 22 h Reaktionszeit wurde die Polymerisation abgebrochen und auf Raumtemperatur abgekühlt. Das Produkt hatte einen Feststoffgehalt von 50,2 % und wurde getrocknet. Das resultierende Polyacrylat hatte einen K-Wert von 75,2, ein gewichtsmittleres Molekulargewicht von Mw = 1 370 000 g/mol, eine Polydispersität von D (Mw/Mn) = 17,13 und eine statische Glasübergangstemperatur von Tg = - 38,0 °C.

Herstellung Basispolymer Ac2:

Ein für radikalische Polymerisationen konventioneller Reaktor wurde mit 30,0 kg 2-Ethylhexylacrylat, 66,0 kg Butylacrylat, 1,0 kg 2-Hydroxyethylmethacrylat, 3,0 kg Acrylsäure und 64,3 kg Aceton/ Isopropanol (95:5) befüllt. Nach 45minütiger Durchleitung von Stickstoffgas unter Rühren wurde der Reaktor auf 58 °C hochgeheizt und 50 g Vazo 67, gelöst in 500 g Aceton, hinzugegeben. Anschließend wurde das äußere Heizbad auf 75 °C erwärmt und die Reaktion konstant bei dieser Außentemperatur durchgeführt. Nach 1 h wurden erneut 50 g Vazo 67, gelöst in 500 g Aceton, zugegeben und nach 4 h wurde mit 12,1 kg Aceton/Isopropanol-Gemisch (95:5) verdünnt.
Nach 5 sowie nach 7 h wurde jeweils mit 150 g Bis-(4-*tert*-butylcyclohexyl)-peroxydicarbonat, jeweils gelöst in 500 g Aceton, nachinitiiert. Nach 22 h Reaktionszeit wurde die Polymerisation abgebrochen und auf Raumtemperatur abgekühlt. Das Produkt hatte einen Feststoffgehalt von 50,2 % und wurde getrocknet. Das resultierende Polyacrylat hatte einen K-Wert von 72,9, ein gewichtsmittleres Molekulargewicht von Mw = 1.040.000 g/mol, eine Polydispersität von D (Mw/Mn) = 8,7 und eine statische Glasübergangstemperatur von Tg = - 59,0 °C.

**Beispiele**

Herstellung haftklebemasse PSA1 bis PSA6

Tabelle 2: Massespezifische Angaben

| Name | Basispolymer | Kupplungsreagenz / Vernetzer | Vernetzeranteil [Gew.-%] |
|---|---|---|---|
| PSA1 | Ac1 | - | - |
| PSA2 | Ac1 | T3P | 0,47 |
| PSA3 | Ac1 | $Al(acac)_3$ | 0,25 |
| PSA4 | Ac2 | T3P | 0,47 |
| PSA5 | Ac2 | $Al(acac)_3$ | 0,25 |
| PSA6 | Ac2 | Desmodur N 3900 | 0,2 |

0,47 Gew.-% T3P entsprechen 3,5 mol% bezogen auf den Acrylsäureanteil des Polymers.

Das Basispolymer in Lösung wurde jeweils mit einer 3 %igen Lösung des Kupplungsreagenzes bzw. des Vernetzers in Isopropanol abgemischt, auf einen Feststoffgehalt von 30 % mit Isopropanol verdünnt und dann aus Lösung auf eine silikonisierte Trennfolie (50 μm Polyester) beschichtet. (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C) Der Masseauftrag betrug jeweils 50 g/m$^2$.

Tabelle 3: Klebtechnische Ergebnisse

| Haftklebemasse | Klebkraft Stahl [N/cm] | Klebkraft PE [N/cm] | Scherstandszeit [min] |
|---|---|---|---|
| PSA1 | 7,5 | 3,02 | 0 |
| PSA2 | 6,79 | 2,85 | 210 |
| PSA3 | 5,98 | 2,21 | 356 |
| PSA4 | 2,31 | 1,59 | 108 |
| PSA5 | 2,44 | 1,03 | 168 |
| PSA6 | 2,35 | 1,22 | 155 |

Zur Beurteilung der Reversibilität der Vernetzung wurden die verklebten Massen zum einen einem Wechselklimatest ausgesetzt (Variation der Luftfeuchtigkeit und der Temperatur) und zum anderen kurz (ca. 1 Minute) mit einer essigsauren Lösung behandelt. Als Maß zur Bestimmung der Vernetzung wurde der elastische Anteil mittels Mikroschertest gemessen und des Weiteren das Muster händisch vom Untergrund (Stahl) abgelöst.

Tabelle 4: Bestimmung der Reversibilität der Vernetzung mittels elastischem Anteil nach Klimawechseltest

| **Haftklebemasse** | **frisch** | **nach 0,5 d 23°C 95% rel. Luftfeuchte** | **nach 0,5 d 80°C 95% rel. Luftfeuchte** | **nach 7 d 23°C 95% rel. Luftfeuchte** | **nach 7 d 80°C 95% rel. Luftfeuchte** |
|---|---|---|---|---|---|
| PSA1 | 7 | 6 | 7 | 5 | 7 |
| PSA2 | 25 | 23 | 20 | 24 | 22 |
| PSA3 | 52 | 50 | 51 | 54 | 53 |
| PSA4 | 74 | 73 | 73 | 71 | 72 |
| PSA5 | 77 | 72 | 69 | 68 | 65 |
| PSA6 | 80 | 79 | 77 | 80 | 78 |

Es hat sich gezeigt, dass die mittels cyklischen Phosphonsäureanhydrid aktivierte Vernetzung der Masse vergleichbar stabil ist wie die mit einem ionischen oder einem kovalenten Vernetzer basierend auf einem multifunktionellen Isocyanat hergestellten Referenzmassen. Bei der mit $Al(acac)_3$ vernetzten Masse hingegen ist eine leichte Absenkung des elastischen Anteils messbar, die jedoch nicht ausreicht, um das Muster rückstandsfrei und mit wenig Kraftaufwand vom Untergrund zu lösen.

Tabelle 4: Bestimmung der Reversibilität der Vernetzung mittels elastischem Anteil nach Behandlung mit essigsaurer Lösung

| **Haftklebemasse** | **frisch** | **nach Behandlung** | **Wiederablösbarkeit** |
|---|---|---|---|
| PSA1 | 7 | 6 | Rückstände |
| PSA2 | 25 | 7 | keine Rückstände |
| PSA3 | 52 | 49 | schlecht |
| PSA4 | 74 | 73 | schlecht |
| PSA5 | 77 | 69 | schlecht |
| PSA6 | 80 | 78 | schlecht |

Aus der letzten Versuchsreihe ist zu erkennen, dass nur die Masse AC1 in Kombination mit dem Kupplungsreagenz nach Behandlung mit essigsaurer Lösung sich leicht und rückstandsfrei ablösen ließ und der elastische Anteil auch deutlich gesunken ist. Sobald zusätzlich noch zu der Carbonsäuregruppe eine weitere Funktionalität im Polymer enthalten ist, die mittels Aktivierung durch das cyklische Phosphonsäureanhydrid mit der Carbonsäure reagiert, ist die Vernetzung irreversibel und die Masse lässt sich nur schwer und meist nur mit Rückständen vom Untergrund wieder ablösen. Die Referenzmassen mit dem ionischen und dem Isocyanat-Vernetzer lassen sich alle nur schwer ablösen.

Es konnte weiterhin beobachtet werden, dass die erfindungsgemäßen Klebemassen, die unter Einsatz zumindest eines cyclischen Phosphonsäureanhydrids als Vernetzungsaktivator hergestellt wurden, ein optimiertes Flammschutzverhalten aufwiesen sowie zumindest teilweise in der Lage waren, Calciumionen zu binden.

## Patentansprüche

1. Vernetzbare Klebemassenzubereitung, umfassend
   zumindest eine Sorte von mit organischen und/oder anorganischen, OH-Gruppen enthaltenden Säureeinheiten funktionalisierten Polymeren und
   zumindest ein cyclisches Phosphonsäureanhydrid.

2. Klebemassenzubereitung nach Anspruch 1, **dadurch gekennzeichnet, dass** das cyclische Phosphonsäureanhydrid ein cyclisches Alkylphosphonsäureanhydrid ist.

3. Klebemassenzubereitung nach einem der vorangehenden Ansprüche, **dadurch gekennzeichnet, dass** das cyclische Phosphonsäureanhydrid ein cyclisches 2,4,6-substituiertes 1,3,5,2,4,6-trioxatriphosphinan-2,4,6-trioxid ist.

4. Klebemassenzubereitung nach einem der vorangehenden Ansprüche, **dadurch gekennzeichnet, dass** die organischen und/oder anorganischen, OH-Gruppen enthaltenden Säureeinheiten Carbonsäuregruppen, Maleinsäuregruppen, Sulfonsäuregruppen und/oder Phosphonsäuregruppen sind.

5. Klebemassenzubereitung nach einem der vorangehenden Ansprüche, **dadurch gekennzeichnet, dass** die mit organischen und/oder anorganischen, OH-Gruppen enthaltenden Säureeinheiten funktionalisierten Polymeren weiterhin zumindest teilweise mit Aminogruppen, monosubstituierten Aminogruppen, bisubstituierten Aminogruppen, Hydroxygruppen, unsubstituierten Phenylresten, substituierten Phenylresten, 1,3-Diketonresten und/oder heteroaromatischen Verbindungen funktionalisiert sind.

6. Klebemassenzubereitung nach einem der vorangehenden Ansprüche, **dadurch gekennzeichnet, dass** zusätzlich zumindest eine Sorte an Polymeren enthalten ist, die mit Aminogruppen, monosubstituierten Aminogruppen, bisubstituierten Aminogruppen, Hydroxygruppen, unsubstituierten Phenylresten, substituierten Phenylresten, 1,3-Diketonresten und/oder heteroaromatischen Verbindungen funktionalisiert sind.

7. Klebemassenzubereitung nach einem der vorangehenden Ansprüche, **dadurch gekennzeichnet, dass** weiterhin Vernetzer enthalten sind.

8. Klebemassenzubereitung nach einem der vorangehenden Ansprüche, **dadurch gekennzeichnet, dass** die ihr zugrundeliegenden Polymere überwiegend solche auf Poly(meth)acrylatbasis sind.

9. Klebemassenzubereitung nach einem der vorangehenden Ansprüche, **gekennzeichnet durch** haftklebrige Eigenschaften.

10. Verfahren zur Vernetzung von vernetzbaren Klebemassen, insbesondere Haftklebemassen, ausgehend von einer Klebemassenzubereitung umfassend zumindest eine Sorte von mit organischen und/oder anorganischen, OH-Gruppen enthaltenden Säureeinheiten funktionalisierten Polymeren, **dadurch gekennzeichnet, dass** als Vernetzungsaktivator zumindest ein cyclisches Phosphonsäureanhydrid eingesetzt wird.

11. Verfahren nach Anspruch 10, **dadurch gekennzeichnet, dass** das cyclische Phosphonsäureanhydrid ein solches nach einem der Ansprüche 2 oder 3 ist.

12. Verfahren nach einem der Ansprüche 10 oder 11, **dadurch gekennzeichnet, dass** die Klebemassenzubereitung eine solche nach einem der Ansprüche 1 bis 9 ist.

13. Klebemasse, insbesondere Haftklebemasse, erhältlich nach einem Verfahren nach einem der Ansprüche 10 bis 12.

## Claims

1. Crosslinkable adhesive preparation comprising at least one sort of polymers functionalised with organic and/or inorganic acid units containing OH groups, and at least one cyclic phosphonic anhydride.

2. Adhesive preparation according to Claim 1, **characterised in that** the cyclic phosphonic anhydride is a cyclic alkyl phosphonic anhydride.

3. Adhesive preparation according to either of the preceding claims, **characterised in that** the cyclic phosphonic anhydride is a cyclic 2,4,6-substituted 1,3,5,2,4,6-trioxatriphosphinane 2,4,6-trioxide.

4. Adhesive preparation according to any of the preceding claims, **characterised in that**

the organic and/or inorganic acid units containing OH groups are carboxylic acid groups, maleic acid groups, sulphonic acid groups and/or phosphonic acid groups.

5. Adhesive preparation according to any of the preceding claims, **characterised in that** the polymers functionalised with organic and/or inorganic acid units containing OH groups are further functionalised at least partly with amino groups, monosubstituted amino groups, bisubstituted amino groups, hydroxyl groups, unsubstituted phenyl radicals, substituted phenyl radicals, 1,3-diketone radicals and/or heteroaromatic compounds.

6. Adhesive preparation according to any of the preceding claims, **characterized in that** additionally present is at least one sort of polymers which are functionalised with amino groups, monosubstituted amino groups, bisubstituted amino groups, hydroxyl groups, unsubstituted phenyl radicals, substituted phenyl radicals, 1,3-diketone radicals and/or heteroaromatic compounds.

7. Adhesive preparation according to any of the preceding claims, **characterised in that** crosslinkers are additionally present.

8. Adhesive preparation according to any of the preceding claims, **characterized in that** the polymers on which it is based are predominantly poly(meth)acrylate-based polymers.

9. Adhesive preparation according to any of the preceding claims, **characterised by** pressure-sensitive adhesive properties.

10. Method for crosslinking crosslinkable adhesives, more particularly pressure-sensitive adhesives, starting from an adhesive preparation comprising at least one sort of polymers functionalised with organic and/or inorganic acid units containing OH groups, **characterised in that** at least one cyclic phosphonic anhydride is used as crosslinking activator.

11. Method according to Claim 10, **characterised in that** the cyclic phosphonic anhydride is one according to either of Claims 2 and 3.

12. Method according to either of Claims 10 and 11, **characterised in that** the adhesive preparation is one according to any of Claims 1 to 9.

13. Adhesive, more particularly pressure-sensitive adhesive, obtainable by a method according to any of Claims 10 to 12.

## Revendications

1. Préparation de masse adhésive réticulable, comprenant au moins une sorte de polymères fonctionnalisés par des unités acides organiques et/ou inorganiques, contenant des groupes OH, et au moins un anhydride phosphonique cyclique.

2. Préparation de masse adhésive selon la revendication 1, **caractérisée en ce que** l'anhydride phosphonique cyclique est un anhydride alkylphosphonique cyclique.

3. Préparation de masse adhésive selon l'une des revendications précédentes, **caractérisée en ce que** l'anhydride phosphonique cyclique est un 1,3,5,2,4,6-trioxatriphosphinane-2,4,6-trioxyde 2,4,6-substitué cyclique.

4. Préparation de masse adhésive selon l'une des revendications précédentes, **caractérisée en ce que** les unités acides organiques et/ou inorganiques contenant des groupes OH sont des groupes acide carboxylique, des groupes acide maléique, des groupes acide sulfonique et/ou des groupes acide phosphonique.

5. Préparation de masse adhésive selon l'une des revendications précédentes, **caractérisée en ce que** les polymères fonctionnalisés par des unités acides organiques et/ou inorganiques contenant des groupes OH sont en outre au moins partiellement fonctionnalisés par des groupes amino, des groupes amino monosubstitués, des groupes amino bi-substitués, des groupes hydroxy, des radicaux phényle non-substitués, des radicaux phényle substitués, des radicaux 1,3-dicétone et/ou des composés hétéro-aromatiques.

6. Préparation de masse adhésive selon l'une des revendications précédentes, **caractérisée en ce qu'**elle contient en outre au moins une sorte de polymères qui sont fonctionnalisés par des groupes amino, des groupes amino monosubstitués, des groupes amino bi-substitués, des groupes hydroxy, des radicaux phényle non-substitués, des radicaux phényle substitués, des radicaux 1,3-dicétone et/ou des composés hétéroaromatiques.

7. Préparation de masse adhésive selon l'une des revendications précédentes, **caractérisée en ce qu'**elle contient en outre des agents de réticulation.

8. Préparation de masse adhésive selon l'une des revendications précédentes, **caractérisée en ce que** les polymères qui sont à sa base sont essentiellement ceux à base de poly(méth)acrylate.

9. Préparation de masse adhésive selon l'une des revendications précédentes, **caractérisée par** des propriétés d'adhérence de contact.

10. Procédé pour la réticulation de masses adhésives réticulables, en particulier de masses adhésives de contact, à partir d'une préparation de masse adhésive comprenant au moins une sorte de polymères fonctionnalisés par des unités acides organiques et/ou inorganiques, contenant des groupes OH, **caractérisé en ce qu'**on utilise en tant qu'activateur de réticulation au moins un anhydride phosphonique cyclique.

11. Procédé selon la revendication 10, **caractérisé en ce que** l'anhydride phosphonique cyclique est un tel anhydride selon l'une des revendications 2 ou 3.

12. Procédé selon l'une des revendications 10 ou 11, **caractérisé en ce que** la préparation de masse adhésive est une telle préparation selon l'une des revendications 1 à 9.

13. Masse adhésive, en particulier masse adhésive de contact, pouvant être obtenue par un procédé selon l'une des revendications 10 à 12.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2004081132 A1
- US 20080292848 A1
- US 6933361 B2
- EP 0658610 A1
- WO 9624620 A1
- WO 9844008 A1
- DE 19949352 A1
- US 5945491 A
- US 5854364 A
- US 5789487 A
- WO 9801478 A1
- WO 9931144 A1

### In der Beschreibung aufgeführte Nicht-Patentliteratur

- **S. D. BERGMAN ; F. WUDL.** *J. Mater. Chem.,* 2008, vol. 18, 41-62
- **DONATAS SATAS.** Handbook of Pressure Sensitive Adhesive Technology. 1989
- **T.G. FOX.** *Bull. Am. Phys. Soc.,* 1956, vol. 1, 123
- **HOUBEN-WEYL.** *Methoden der Organischen Chemie,* vol. E 19a, 60-147
- *Macromolecules,* 2000, vol. 33, 243-245